# EUROPÄISCHE PATENTSCHRIFT

(11) **EP 1 685 342 B1**
(45) Veröffentlichungstag und Bekanntmachung des Hinweises auf die Patenterteilung: **23.05.2007**
(21) Anmeldenummer: 04797954.7
(22) Anmeldetag: 17.11.2004
(51) Int. Cl.: F16K 17/04, E21D 23/16

(54) **DRUCKBEGRENZUNGSVENTIL**
PRESSURE RELIEF VALVE
SOUPAPE DE LIMITATION DE PRESSION

(30) Priorität: 19.11.2003 DE 10353982
(43) Veröffentlichungstag der Anmeldung: 02.08.2006
(73) Patentinhaber: MARCO SYSTEMANALYSE UND ENTWICKLUNG GmbH, D-85221 Dachau (DE)
(72) Erfinder: REUTER, Martin, 85221 Dachau (DE)
(74) Vertreter: Manitz, Finsterwald & Partner GbR
(86) Internationale Anmeldenummer: PCT/EP2004/013041
(87) Internationale Veröffentlichungsnummer: WO 2005/050072

(56) Entgegenhaltungen:
- WO-A-99/09341
- US-A- 5 168 895
- US-A- 5 305 780

## Beschreibung

Die vorliegende Erfindung betrifft ein elektrohydraulisches Ausbausystem für den Untertagebau, nach dem Oberbegriff des Anspruchs 1 (vgl. US-A-5,168,895).

Druckbegrenzungsventile sind heutzutage bei Hydrauliksystemen im Untertagebau entlang der Rücklaufleitung montiert, wodurch jedoch die Verteilung dieser Ventile von der grubenseitigen Installation abhängig ist. Wenn jedoch der Rücklaufstaudruck über einen bestimmten Wert ansteigt, kann dies zur Folge haben, dass weitere Ventile, welche Hydraulikzylinder von Ausbaugestellen ansteuern, ungewünscht betätigt werden, da diese Ventile im ausgeschalteten Zustand mit dem Rücklauf verbunden sind. Hierdurch kann es dazu kommen, dass bei ungewolltem Ansteigen des Staudrucks Ventile eines Ausbaugestells entsperrt bzw. geöffnet werden, so dass beispielsweise das entsprechende Ausbaugestell geraubt wird. Hierdurch wird die in den Hydraulikzylindern befindliche Hydraulikflüssigkeit zusätzlich in den Rücklauf gegeben, was den Staudruck weiter erhöht, so dass das nächste benachbarte Schild ungewollt geraubt wird. Dies kann im ungünstigsten Fall zu einer Kettenreaktion führen, bei der ein kompletter Streb ungewollt eingeraubt wird.

Es ist die Aufgabe der Erfindung, ein elektrohydraulisches Ausbausystem zu schaffen, das die obigen Probleme beseitigt. Die Lösung dieser Aufgabe erfolgt durch die Merkmale des Anspruchs 1.

Erfindungsgemäß weist das verwendete Druckbegrenzungsventil einen Ventilkörper auf, in dem ein gegen die Kraft einer Feder verschiebbarer Kolben vorgesehen ist, der in seiner Ruhestellung eine im Ventilkörper vorgesehene Austrittsöffnung verschließt. Der Kolben ist an seiner Vorderseite über einen ersten Eintrittskanal im Ventilkörper mit Druckfluid beaufschlagbar und gegen die Kraft der Feder verschiebbar, um die Austrittsöffnung freizugeben. Ferner ist in dem Ventilkörper ein zweiter Eintrittskanal vorgesehen, über den die Rückseite des Kolbens mit Druckfluid beaufschlagbar ist. Auf diese Weise ist die Kraft beeinflussbar, mit welcher der Kolben aus seiner Ruhestellung verschiebbar ist, um die Austrittsöffnung freizugeben und dadurch die abzusichernde Druckleitung zu entlasten.

Der erste Eintrittskanal steht mit einer Rücklaufleitung und der zweite Eintrittskanal mit einer Druckleitung eines Hydrauliksystems in Verbindung. Hierdurch ergibt sich der große Vorteil, dass der Öffnungsdruck des Druckbegrenzungsventils in Abhängigkeit von dem Druck in der Druckleitung variierbar ist. Da heutzutage der Rücklaufdruck in hydraulischen Ausbausystemen im Untertagebau eine Größenordnung von etwa 80 bar erreichen kann, sollte das Druckbegrenzungsventil grundsätzlich erst ab diesem Druck öffnen. Andererseits besteht jedoch wie oben erwähnt die Gefahr, dass bei derartig hohen Rücklaufdrücken versehentlich Ventile eines Ausbaugestells geschaltet werden, wenn die Druckleitung unter nur geringem oder keinem Druck steht. Erfindungsgemäß variiert der Öffnungsdruck des Druckbegrenzungsventils in Abhängigkeit von dem in der Druckleitung vorhandenen Druck. Ist die Druckleitung, beispielsweise bei Betriebsstillstand, drucklos, so wird der Öffnungsdruck des Druckbegrenzungsventils ausschließlich durch die Feder bestimmt. Steht jedoch die Druckleitung unter Betriebsdruck, beispielsweise in einem Bereich zwischen etwa 0 und 320 bar, so erhöht sich der Öffnungsdruck des Druckbegrenzungsventils mit zunehmendem Druck in der Druckleitung, da der Kolben nicht nur gegen die Kraft der Feder sondern auch gegen den an der Rückseite des Kolbens anliegenden Druck der Druckleitung bewegt werden muss.

Vorteilhafte Ausführungsformen der Erfindung sind in der Beschreibung, der Zeichnung und den Unteransprüchen beschrieben.

Bevorzugt ist die vorderseitige Kolbenfläche größer als die rückseitige Kolbenfläche, insbesondere etwa zwei- bis sechsmal, insbesondere viermal so groß. Die Wahl des Flächenverhältnisses erfolgt in Abhängigkeit von den jeweiligen im Ausbaugestell verwendeten Entsperrventilen. Bei einem Verhältnis der vorderseitigen zur rückseitigen Kolbenfläche von 4:1 bedeutet dies, dass der Öffnungsdruck des Druckbegrenzungsventils die Summe aus dem der Federkraft entsprechenden Öffnungsdruck und einem Viertel des Druckes der Druckleitung ist. Somit kann durch das Flächenverhältnis der Kolbenflächen die Kennlinie des Druckbegrenzungsventils beeinflusst werden.

Bei dem oben genannten Beispiel kann somit der Versorgungsdruck in der Druckleitung zwischen 0 und 320 bar variieren, während der Öffnungsdruck des Druckbegrenzungsventils dann zwischen etwa 10 und 90 bar variiert, wenn die verwendete Feder bei einem Druck von etwa 10 bar zusammengedrückt werden kann.

Nachfolgend wird die folgende Erfindung rein beispielhaft anhand einer vorteilhaften Ausführungsform unter Bezugnahme auf die beigefügten Zeichnungen beschrieben. Es zeigen:
- Fig. 1: eine Schnittansicht eines Ventils, dessen Kolben sich in der Ruhstellung befindet; und
- Fig. 2: eine Fig. 1 entsprechende Ansicht, wobei sich der Kolben in seiner Arbeitsstellung befindet.

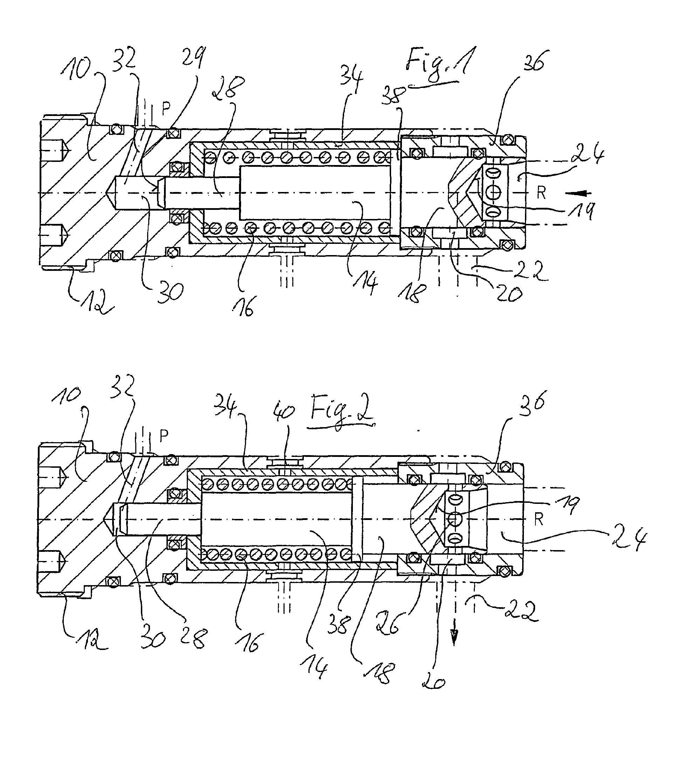

Die Fig. 1 und 2 zeigen einen Längsschnitt durch ein hydraulisch verstellbares Druckbegrenzungsventil, das einen Ventilkörper 10 aufweist, der patronenartig ausgebildet ist und über ein Gewinde 12 in ein (nicht dargestelltes) Ventilgehäuse eingeschraubt werden kann, das mit entsprechenden Bohrungen versehen ist, um den Zulauf und Ablauf von Druckfluid in das Ventil zu ermöglichen.

In dem Gehäuse 10 ist ein Kolben 14 axial verschiebbar angeordnet, der gegen die Kraft einer Feder 16 verschiebbar ist. In der in Fig. 1 dargestellten Ruhestellung des Kolbens 14 verschließt dieser mit seinem Kolbenkopf 18 eine im Ventilkörper 10 vorgesehene Austrittsöffnung 20, die über einen im Ventilgehäuse vorhandenen Austrittskanal 22 mit der umgebenden Atmosphäre verbunden ist.

An seiner Vorderseite ist der Kolben 14 über einen ersten Eintrittskanal 24 im Ventilkörper 10 mit Druckfluid beaufschlagbar, da der erste Eintrittskanal 24 mit der Rücklaufleitung R eines elektrohydraulischen Ausbausystems für den Untertagebau verbunden ist. Wenn der Rücklaufdruck R so stark ansteigt, dass die Feder 16 zusammengedrückt wird, bewegt sich der Kolben 14 aus seiner in Fig. 1 dargestellten Ruhestellung in die in Fig. 2 dargestellte Arbeitsstellung, in der über im Bereich des Kolbenkopfes 18 vorgesehene Durchflussöffnungen 26 eine Verbindung zum Austrittskanal 22 hergestellt ist, so dass Druckfluid von der Rücklaufleitung R in das Freie abgespritzt werden kann. Hierbei kann die Austrittsöffnung 20 durch eine (nicht dargestellte) Blattfeder abgedeckt sein, um das Eintreten von Verschmutzungen in das Innere des Ventils zu verhindern.

Wie die Fig. 1 und 2 ferner zeigen, ist der Kolben 14 an seinem hinteren, d.h. dem Kolbenkopf 18 entgegengesetzten Ende mit einem stiftförmigen Fortsatz 28 versehen, der abgedichtet in einer Bohrung 30 innerhalb des Ventilkörpers 10 gleitet, die mit einem zweiten Eintrittskanal 32 in Verbindung steht, der mit der Druckleitung P des Hydrauliksystems verbunden ist. Somit wird der Kolben an seiner rückseitigen Kolbenfläche 29 mit dem Versorgungsdruck der Druckleitung P beaufschlagt, wohingegen der Kolben 14 an seiner vorderseitigen Kolbenfläche 19 mit dem Rücklaufdruck R beaufschlagt wird. Das Verhältnis der vorderseitigen Kolbenfläche 19 zur rückseitigen Kolbenfläche 29 beträgt etwa 4:1.

Wie Fig. 2 zeigt, wird der Kolben 14 dann in seine Arbeitsstellung bewegt, wenn der Rücklaufdruck einen Wert erreicht hat, welcher der Summe entspricht, die aus den beiden Drücken gebildet ist, die einerseits dem Zusammendrücken der Feder 16 und andererseits einem Viertel des Versorgungsdruckes P entsprechen. Sofern das Verhältnis von vorderseitiger Kolbenfläche 19 zu rückseitiger Kolbenfläche 29 beispielsweise mit 2:1 gewählt wird, würde die Kraft der Summe aus dem der Federkraft entsprechenden Druck und der Hälfte des Versorgungsdruckes P entsprechen.

Das vorstehend beschriebene Druckbegrenzungsventil zeichnet sich durch eine besonders einfache Konstruktion aus, da es mit Hilfe von rein mechanischen Mitteln die gewünschten Funktionen gewährleistet. Neben dem Ventilkörper 10, dem Kolben 14 und der Feder 16 sind bei dem dargestellten Ausführungsbeispiel abgesehen von Dichtmitteln lediglich eine Kolbenhülse 34 und ein Abschlussstopfen 36 vorhanden. Die Kolbenhülse 34 ist in eine Bohrung des Ventilkörpers 10 eingesetzt und dient zur Führung des Kolbens 14. Der Abschlussstopfen 36 kann in den Ventilkörper 10 eingeschraubt werden, um den Kolben 14 in dem Ventilkörper 10 zu sichern, wobei das untere Ende des Abschlussstopfens 36 gleichzeitig als Anschlag für einen kragenförmigen Vorsprung 38 des Kolbens 14 dient.

Über in dem Ventilkörper 10 vorgesehene Bohrungen 40 kann Leckfluid entweichen, das in den Bereich der Feder 16 eingedrungen ist.

### Bezugszeichenliste

- 10: Ventilkörper
- 12: Gewinde
- 14: Kolben
- 16: Feder
- 18: Kolbenkopf
- 19: vorderseitige Kolbenfläche
- 20: Austrittsöffnung
- 22: Austrittskanal
- 24: Eintrittskanal
- 26: Durchflussöffnung
- 28: stiftförmiger Fortsatz
- 29: rückseitige Kolbenfläche
- 30: Bohrung
- 32: Eintrittskanal
- 34: Hülse
- 36: Abschlussstopfen
- 38: Vorsprung
- 40: Bohrung

## Patentansprüche

1. Elektrohydraulisches Ausbausystem für den Untertagebau mit zumindest einem Ausbaugestell mit mehreren über elektrische Ventile gesteuerten Hydraulikzylindern, die jeweils an eine Druckleitung (P) und eine Rücklaufleitung (R) angeschlossen sind, wobei an die Rücklaufleitung ein hydraulisches Druckbegrenzungsventil angeschlossen ist, das einen Ventilkörper (10) aufweist, in dem ein gegen die Kraft einer Feder (16) verschiebbarer Kolben (14) vorgesehen ist, der in seiner Ruhestellung eine im Ventilkörper (10) vorgesehene Austrittsöffnung (20) verschließt, wobei der Kolben (14) an seiner Vorderseite über einen ersten im Ventilkörper (10) vorgesehenen Eintrittskanal (24), der mit der Rücklaufleitung (R) in Verbindung steht, mit Druckfluid beaufschlagbar und gegen die Kraft der Feder (16) verschiebbar ist, um die Austrittsöffnung (20) freizugeben, **dadurch gekennzeichnet, dass** in dem Ventilkörper (10) ein zweiter Eintrittskanal (32) vorgesehen ist, der mit der Druckleitung (P) in Verbindung steht, und über den die Rückseite des Kolbens (14) mit Druckfluid beaufschlagbar ist.

2. Elektrohydraulisches Ausbausystem nach Anspruch 1,
**dadurch gekennzeichnet, dass**
die vorderseitige Kolbenfläche (19) größer als die rückseitige Kolbenfläche (29) ist, insbesondere etwa zwei- bis sechsmal so groß.

## Claims

1. An electrohydraulic support system for underground mining comprising at least one support frame having a plurality of hydraulic cylinders which are controlled via electric valves and are each connected to a pressure line (P) and a return line (R), wherein a hydraulic pressure relief valve is connected to the return line and has a valve body (10) in which a piston (14) is provided which is displaceable against the force of a spring (16) and which in its rest position closes a discharge opening (20) provided in the valve body (10), wherein the piston (14) can be loaded with pressure fluid at its front side via a first inlet passage (24) which is provided in the valve body (10) in communication with the return line (R) and displaceable against the force of the spring (16) to release the discharge opening (20),
**characterized in that**
a second inlet passage (32) via which the rear side of the piston (14) can be loaded with pressure fluid is provided in the valve body (10) in communication with the pressure line (P).

2. An electrohydraulic support system in accordance with claim 1, **characterized in that** the front side piston surface (19) is larger than the rear side piston surface (29), in particular two to six times as large.

## Revendications

1. Dispositif de soutènement électrohydraulique pour l'exploitation minière, comprenant au moins un châssis de soutènement comportant plusieurs vérins hydrauliques commandés par des vannes électriques et qui sont raccordés respectivement à une conduite de pression (P) et à une conduite de retour (R), dans lequel à la conduite de retour est branchée une vanne de limitation pression hydraulique qui comprend un corps de vanne (10) dans lequel est prévu un piston (14) déplaçable à l'encontre de la force d'un ressort (16), piston qui dans sa position de repos ferme une ouverture de sortie (20) prévue dans le corps de vanne (10), et le piston (14) est susceptible d'être attaqué par du fluide sous pression au niveau de sa face antérieure via un premier canal d'entrée (24), prévu dans le corps de vanne (10) et en communication avec la conduite de retour (R), et d'être déplacé à l'encontre de la force du ressort (16) pour libérer l'ouverture de sortie (20),
**caractérisé en ce que**, dans le corps de vanne (10) est prévu un second canal d'entrée (32) qui communique avec la conduite sous pression (P) et via lequel la face postérieure du piston (14) peut être attaquée par du fluide sous pression.

2. Dispositif de soutènement électrohydraulique selon la revendication 1,
**caractérisé en ce que** la surface du piston côté antérieur (19) est plus grande que la surface du piston côté postérieur (29), en particulier environ deux à six fois plus grande.
